# EUROPEAN PATENT SPECIFICATION

(11) **EP 4 065 389 B1**
(45) Date of publication and mention of the grant of the patent: **16.08.2023**
(21) Application number: 19821300.1
(22) Date of filing: 27.11.2019
(51) Int. Cl.: B60C 11/13, B60C 11/12, B60C 11/03

(54) **A TREAD FOR IMPROVING SNOW PERFORMANCE**
LAUFFLÄCHE FÜR VERBESSERTE SCHNEELEISTUNG
BANDE DE ROULEMENT POUR AMÉLIORER LES PERFORMANCES SUR LA NEIGE

(43) Date of publication of application: 05.10.2022
(73) Proprietor: COMPAGNIE GENERALE DES ETABLISSEMENTS MICHELIN, 63000 Clermont-Ferrand (FR)
(72) Inventor: UCHIDA Tomotake, Tokyo 163-1073 (JP)
(74) Representative: Desbordes, Guillaume
(86) International application number: PCT/JP2019/046346
(87) International publication number: WO 2021/106102

(56) References cited:
- EP-A1- 2 894 050
- EP-A1- 2 977 230
- WO-A1-2014/099847
- JP-A- H10 244 813
- JP-A- 2003 154 527

## Description

### [Technical Field]

The present invention relates to a tread for a tire, in particular to a tread for a tire for improving snow performance and wet performance at the same time.

### [Background Art]

In recent years, a tire so-called "all-season" tire which has capability to drive on wintry surface while maintaining high speed driving capability on non-wintry surface is beginning to popularize.

Also to a tire so-called "studless" tire which is suitable for driving on ice covered and/or snow covered wintry surface, there is a desire to increase performance on non-wintry surface that is not covered by ice nor snow while still improving performance on wintry surface.

In order to increase performance on wintry surface especially snow performance, it is known to increase locally contact pressure enabling a tread digging into snow surface is effective. It is also known that such the way impacts negatively performance on non-wintry surface, as this way often the case decreases area of the tread contacting with road surface.

JP07101209 discloses a pneumatic tire provided with a plurality of blocks having a circumferential length of 30 to 50mm, a radius of curvature of each the block Rb is made smaller than a tire outline radius Ra in a range of 0.15 ≦ Ra/Rb ≦ 0.60 on a tire circumferential cross section for improving irregular wear resistance and noise performance.

WO2004011282 discloses a pneumatic tire provided with blocks on a tread, the blocks being provided with, on their contact face, a first arcuate portion having a center of curvature at inner side of the tire and a second arcuate portion having a center of curvature at exterior side of the tire on leading edge side and on trailing edge side of the blocks for improving irregular wear resistance.

JP10244813 discloses a pneumatic tire provided with blocks on a tread, the blocks being divided into sub-blocks via sipe, and an outline of a contact face of the sub blocks is formed to have smaller radius of curvature than a radius of curvature of an outline of the tread for improving ice performance while maintaining snow performance.

### [Citation List]

### [Patent Literature]

[PTL 1]
   JP07101209
[PTL 2]
   WO2004011282
[PTL 3]
   JP10244813

However with the solutions disclosed in these documents, improvement on snow performance is not satisfactory. Also at the same time, degradation of wet performance is not an acceptable level. Thus there is a desire to further improvement of snow performance and on wet performance at the same time.

Therefore, there is a need for a tread for a tire which provides improvement both on snow performance and on wet performance at the same time.

### Definitions:

A "radial direction/orientation" is a direction/orientation perpendicular to axis of rotation of the tire. This direction/orientation corresponds to thickness orientation of the tread.

An "axial direction/orientation" is a direction/orientation parallel to axis of rotation of the tire.

A "circumferential direction/orientation" is a direction/orientation which is tangential to any circle centered on axis of rotation. This direction/orientation is perpendicular to both the axial direction/orientation and the radial direction/orientation.

A "tire" means all types of elastic tire whether or not subjected to an internal pressure.

A "tread" of a tire means a quantity of rubber material bounded by lateral surfaces and by two main surfaces one of which is intended to come into contact with ground when the tire is rolling.

A "groove" is a space between two rubber faces/sidewalls which do not contact between themselves under usual rolling condition connected by another rubber face/ bottom. A groove has a width and a depth.

An "incision", also referred to as a "sipe" is a narrow cutout formed toward radially inwardly from a surface of a tread made by, for example a thin blade having a shape like a knife blade. A width of the incision at the surface of the tread is narrower than a groove, for example less than or equal to 2.0mm. this incision may, different from the groove, be partly or completely closed when such the incision is in a contact patch and under usual rolling condition.

A "contact patch" is a footprint of a tire mounted onto its standard rim as identified in tire standards such as ETRTO, JATMA or TRA, and inflated at its nominal pressure and under its nominal load. A "width TW" of a contact face is a maximum contact width of the contact patch along with an axis of rotation of the tire.

It is thus an object of the invention to provide a tread for a tire which provides improvement both on snow performance and on wet performance at the same time.

### [Summary of Invention]

The present invention provides a tread for a tire having a contact face intended to come into contact with ground during rolling, the tread being provided with a plurality of grooves of a depth D extending in an orientation having a non-zero angle A relative to circumferential orientation and opening to the contact face, at least two circumferentially adjacent grooves of the plurality of grooves delimiting a contact element, the contact element having at least one incision opening to the contact face and extending in an orientation substantially parallel to the orientation in which the closest plurality of grooves being extending and radially inward orientation, the contact element being delimited into at least two sub-contact elements via the plurality of grooves and the at least one incision, on a plane perpendicular to the orientation in which the plurality of grooves being extending and to the contact face, each the at least one of the at least two sub-contact elements having a length Ls, an outermost portion of each the sub-contact element constituting a part of the contact face, the outermost portion of the at least one of the at least two sub-contact elements having a radius Rs smaller than a radius Rt of an outline OL of the tread at an intersection between the outline OL and the outermost portion, the radius Rs is smaller than or equal to 16.0 mm and greater than or equal to 5.0 mm.

This arrangement provides an improvement both on snow performance and on wet performance at the same time.

Since an outermost portion of each the sub-contact element constituting a part of the contact face, the outermost portion of the at least one of the at least two sub-contact elements having a radius Rs smaller than a radius Rt of an outline OL of the tread at an intersection between the outline OL and the outermost portion, contact of the outermost portion of the at least one of the at least two sub-contact elements at an intersection between the outline OL and the outermost portion decreases thus increasing a contact pressure which enables the sub-contact elements digging into snow surface deeper. Such the effect is more emphasized due to the fact that a rubber material constituting the contact element / the sub-contact element becomes relatively hard at low temperature like on a snow ground. Therefore it is possible to improve snow performance.

At high temperature like on a wet ground, the rubber material constituting the contact element / sub-contact element becomes relatively soft that allows the outermost portion of the at least one of the at least two sub-contact elements deform as to increase contact area contacting with ground. Therefore it is possible to maintain wet performance at reasonable level.

Since the radius Rs is smaller than or equal to 16.0 mm and greater than or equal to 5.0 mm, it is possible to improve snow performance and wet performance at the same time.

If this radius Rs is greater than 16.0 mm, there is a risk that decrease of contact of the outermost portion of the at least one of the at least two sub-contact elements at an intersection between the outline OL and the outermost portion becomes insufficient, thus the sub-contact element encounters difficulty digging into snow surface due to insufficient contact pressure. If this radius Rs is smaller than 5.0 mm, there is a risk that the outermost portion of the at least one of the at least two sub-contact elements cannot deform sufficiently even at high temperature like on the wet ground thus the sub-contact element encounters difficulty maintaining wet performance due to insufficient contact area contacting with ground. By setting this radius Rs less than or equal to 16.0 mm and greater than or equal to 5.0 mm, it is possible to improve snow performance and wet performance at the same time.

This radius Rs is preferably less than or equal to 15.0 mm, more preferably less than or equal to 13.0 mm, still more preferably less than or equal to 12.0 mm. This radius Rs is preferably greater than or equal to 6.0 mm.

In another preferred embodiment, the intersection between the outline OL and the outermost portion locates at a center region of the outermost portion.

According to this arrangement, it is possible to generate increased contact pressure equally on both braking direction and acceleration direction thus possible to improve snow performance efficiently.

In another preferred embodiment, the contact element contains less than or equal to 5 sub-contact elements.

If the contact element contains more than 5 sub-contact elements, there is a risk of insufficient snow performance improvement because contact of the outermost portion of the at least one of the at least two sub-contact elements at an intersection between the outline OL and the outermost portion increases thus the sub-contact element encounters difficulty digging into snow surface due to decreased contact pressure. By setting as to the contact element contains less than or equal to 5 sub-contact elements, it is possible to improve snow performance and wet performance at the same time.

The contact element preferably contains less than or equal to 4 sub-contact elements, more preferably less than or equal to 3 sub-contact elements.

In another preferred embodiment, all the sub-contact elements in the same contact element have the outermost portion having the radius Rs.

According to this arrangement, it is possible to uniformly generate increased contact pressure within the contact element thus possible to improve snow performance efficiently.

In another preferred embodiment, the radius Rs is the same at each the sub-contact element in the same contact element.

According to this arrangement, it is possible to uniformly generate increased contact pressure within the contact element thus possible to improve snow performance efficiently.

In another preferred embodiment, the non-zero angle A relative to circumferential orientation is greater than or equal to 30°.

If the non-zero angle A relative to circumferential orientation is smaller than 30°, there is a risk of insufficient snow performance improvement because an area generating increased contact pressure in a contact patch decreases due to the non-zero angle A which is equal or similar to an angle extending the contact element. By setting the non-zero angle A relative to circumferential orientation is greater than or equal to 30°, it is possible to improve snow performance while maintaining wet performance.

### [Advantageous Effects of Invention]

According to the arrangements described above, it is possible to provide a tread for a tire which provides improvement both on snow performance and on wet performance at the same time.

### [Brief Description of Drawings]

Other characteristics and advantages of the invention arise from the description made hereafter in reference to the annexed drawings which show, as nonrestrictive examples, the embodiment of the invention.

In these drawings:
[Fig. 1]

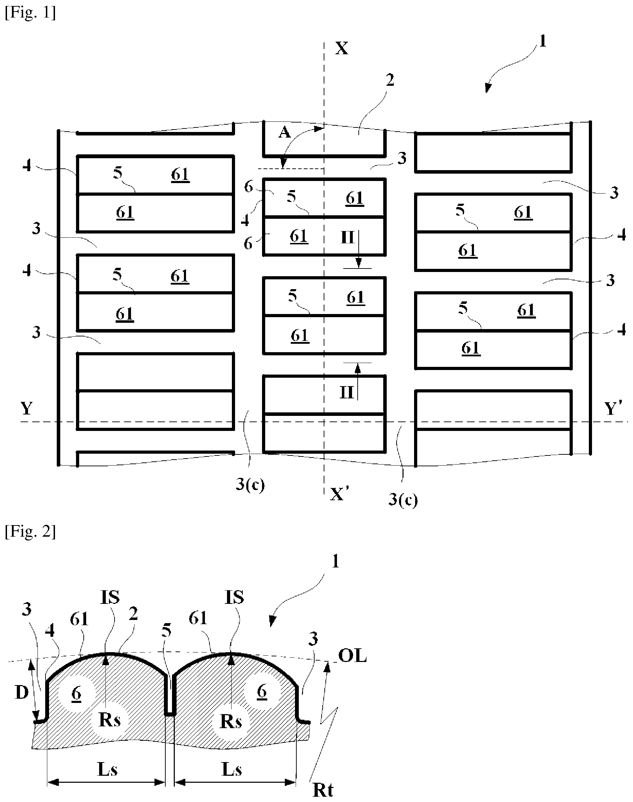

   Fig. 1 is a schematic plan view of a tread according to a first embodiment of the present invention;
[Fig. 2]
   Fig. 2 is a schematic cross sectional view taken along line II-II in Fig. 1;
[Fig. 3]

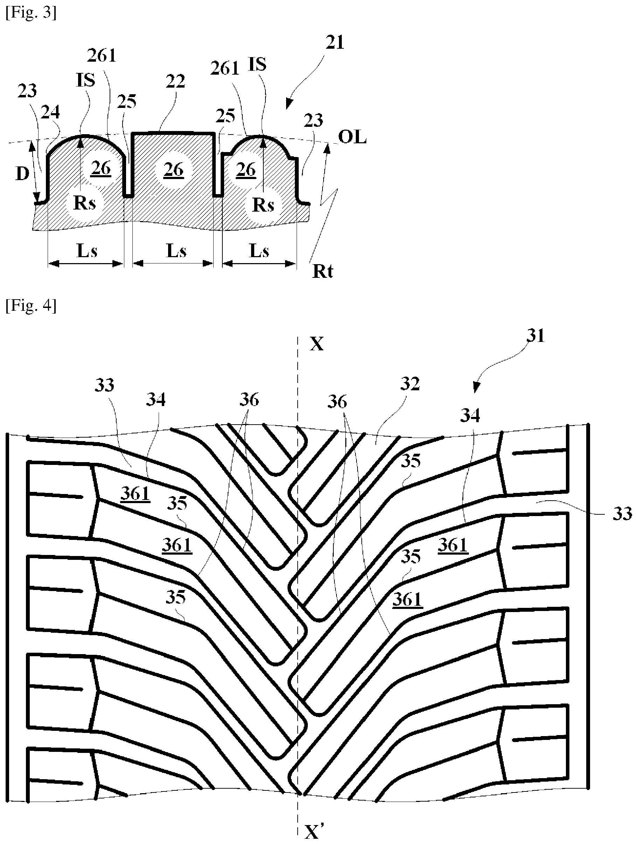

   Fig. 3 is a schematic cross sectional view of a tread according to a second embodiment of the present invention;
[Fig. 4]
   Fig. 4 is a schematic plan view of a tread according to a third embodiment of the present invention;

### [Description of Embodiments]

Preferred embodiments of the present invention will be described below referring to the drawings.

A tread 1 for a tire according to a first embodiment of the present invention will be described referring to Figs. 1 and 2. Fig. 1 is a schematic plan view of a tread according to a first embodiment of the present invention. Fig. 2 is a schematic cross sectional view taken along line II-II in Fig. 1.

The tread 1 is a tread for a tire having dimension 225/45R17 and comprises a contact face 2 intended to come into contact with the ground during rolling, and a plurality of grooves 3 of a depth D (shown in Fig. 2) extending in an orientation having a non-zero angle A relative to circumferential orientation as indicated by line XX' and opening to the contact face 2. The tread 1 also comprising 2 circumferential grooves 3(c) opening to the contact face 2 and extending along circumferential orientation. The tread 1 comprising a contact element 4 being delimited via at least two circumferentially adjacent grooves 3 of the plurality of grooves 3 and the circumferential groove 3(c) and/or an axial extremity of the tread 1. In this first embodiment, the depth D is 8.0 mm, and the non-zero angle A is 90° which is equal to axial orientation as indicated by line YY'.

As shown in Fig. 1, the contact element 4 having at least one incision 5 opening to the contact face 2 and extending in an orientation substantially parallel to the orientation in which the closest plurality of grooves 3 being extending and radially inward orientation, the contact element 4 being delimited into at least two sub-contact elements 6 via the plurality of grooves 3 and the at least one incision 5. In this first embodiment, the contact element 4 is delimited into two sub-contact elements 6.

The at least one incision 5 is extending in the orientation substantially parallel to the orientation in which the closest plurality of grooves 3 being extending, means that the at least one incision 5 is extending in the orientation within 20° relative to the orientation in which the closest plurality of grooves 3 being extending.

As shown in Figs. 1 and 2, on a plane perpendicular to the orientation in which the plurality of grooves 3 being extending and to the contact face 2, each the at least one of the at least two sub-contact elements 6 having a length Ls, an outermost portion 61 of each the sub-contact element 6 constituting a part of the contact face 2, the outermost portion 61 of the at least one of the at least two sub-contact elements 6 having a radius Rs smaller than a radius Rt of an outline OL of the tread 1 at an intersection IS between the outline OL and the outermost portion 61, the radius Rs is smaller than or equal to 16.0 mm. in this first embodiment, the length Ls of the sub-contact element 6 is 8.5 mm, the radius Rs of the outermost portion 61 of the sub-contact element 6 is 10.0 mm, 2 sub-contact elements has the same radius Rs and the intersection IS locates at a center region of the outermost portion 61. The center region is a region of the outermost portion 61 positioned at a center when the outermost portion 61 is equally divided into 3 along the length Ls of the sub-contact element 6.

Since an outermost portion 61 of each the sub-contact element 6 constituting a part of the contact face 2, the outermost portion 61 of the at least one of the at least two sub-contact elements 6 having a radius Rs smaller than a radius Rt of an outline OL of the tread 1 at an intersection IS between the outline OL and the outermost portion 61, contact of the outermost portion 61 of the at least one of the at least two sub-contact elements 6 at an intersection IS between the outline OL and the outermost portion 61 decreases thus increasing a contact pressure which enables the sub-contact elements 6 digging into snow surface deeper. Such the effect is more emphasized due to the fact that a rubber material constituting the contact element 4 / the sub-contact element 6 becomes relatively hard at low temperature like on a snow ground. Therefore it is possible to improve snow performance.

At high temperature like on a wet ground, the rubber material constituting the contact element 4 / sub-contact element 6 becomes relatively soft that allows the outermost portion 61 of the at least one of the at least two sub-contact elements 6 deform as to increase contact area contacting with ground. Therefore it is possible to maintain wet performance at reasonable level.

Since the radius Rs is smaller than or equal to 16.0 mm and greater than or equal to 5.0 mm, it is possible to improve snow performance and wet performance at the same time.

If this radius Rs is greater than 16.0 mm, there is a risk that decrease of contact of the outermost portion 61 of the at least one of the at least two sub-contact elements 6 at an intersection IS between the outline OL and the outermost portion 61 becomes insufficient, thus the sub-contact element 6 encounters difficulty digging into snow surface due to insufficient contact pressure. If this radius Rs is smaller than 5.0 mm, there is a risk that the outermost portion 61 of the at least one of the at least two sub-contact elements 6 cannot deform sufficiently even at high temperature like on the wet ground thus the sub-contact element 6 encounters difficulty maintaining wet performance due to insufficient contact area contacting with ground. By setting this radius Rs less than or equal to 16.0 mm and greater than or equal to 5.0 mm, it is possible to improve snow performance and wet performance at the same time.

This radius Rs is preferably less than or equal to 15.0 mm, more preferably less than or equal to 13.0 mm, still more preferably less than or equal to 12.0 mm. This radius Rs is preferably greater than or equal to 6.0 mm.

Since the intersection IS between the outline OL and the outermost portion 61 locates at a center region of the outermost portion 61, it is possible to generate increased contact pressure equally on both braking direction and acceleration direction thus possible to improve snow performance efficiently.

Since the contact element 4 contains less than or equal to 5 sub-contact elements 6, it is possible to improve snow performance and wet performance at the same time.

If the contact element 4 contains more than 5 sub-contact elements 6, there is a risk of insufficient snow performance improvement because contact of the outermost portion 61 of the at least one of the at least two sub-contact elements 6 at an intersection IS between the outline OL and the outermost portion 61 increases thus the sub-contact element 6 encounters difficulty digging into snow surface due to decreased contact pressure.

The contact element 4 preferably contains less than or equal to 4 sub-contact elements 6, more preferably less than or equal to 3 sub-contact elements 6.

Since all the sub-contact elements 6 in the same contact element 4 have the outermost portion 61 having the radius Rs, it is possible to uniformly generate increased contact pressure within the contact element 4 thus possible to improve snow performance efficiently.

Since the radius Rs is the same at each the sub-contact element 6 in the same contact element 4, it is possible to uniformly generate increased contact pressure within the contact element 4 thus possible to improve snow performance efficiently.

Since the non-zero angle A relative to circumferential orientation is greater than or equal to 30°, it is possible to improve snow performance while maintaining wet performance.

If the non-zero angle A relative to circumferential orientation is smaller than 30°, there is a risk of insufficient snow performance improvement because an area generating increased contact pressure in a contact patch decreases due to the non-zero angle A which is equal or similar to an angle extending the contact element.

The grooves 3 and/or incision 5 may be provided in a shape of straight, curved, zig-zagged or combination of these shapes, in plan view and/or in cut view of the tread 1.

The length Ls of each the sub-contact element 6 in the same contact element 4 may vary from one another.

The sub-contact elements 6 may be provided to whole the contact element 4, to the contact element 4 in a specific rib divided by the circumferential grooves 3(c) and/or the axial extremity of the tread 1, or to the specific contact element 4 only.

A tread 21 according to a second embodiment of the present invention will be described referring to Fig. 3. Fig. 3 is a schematic cross sectional view of a tread according to a second embodiment of the present invention. The construction of this second embodiment is similar to that of the first embodiment other than the arrangement shown in Fig. 3, thus description will be made referring to Fig. 3.

As shown in Fig. 3, the tread 21 comprises a contact face 22 intended to come into contact with the ground during rolling, and a plurality of grooves 23 of a depth D. The tread 21 comprising a contact element 24 being delimited via two circumferentially adjacent grooves 23 of the plurality of grooves 23.

As shown in Fig. 3, the contact element 24 having at least one incision 25 opening to the contact face 22 and extending in radially inward orientation, the contact element 24 being delimited into at least two sub-contact elements 26 via the plurality of grooves 23 and the at least one incision 25. In this second embodiment, the contact element 24 is delimited into three sub-contact elements 26 via the two incisions 25.

As shown in Fig. 3, on a plane perpendicular to the orientation in which the plurality of grooves 23 being extending and to the contact face 22, each the at least one of the at least two sub-contact elements 26 having a length Ls, an outermost portion 261 of each the sub-contact element 26 constituting a part of the contact face 22, the outermost portion 261 of the two circumferentially outward sub-contact elements 26 having a radius Rs smaller than a radius Rt of an outline OL of the tread 21 at an intersection IS between the outline OL and the outermost portion 261, an intermediate sub-contact element 26 having a radius equal to the radius Rt of the outline OL of the tread 21.

As shown in Fig. 3, one of the two circumferentially outward sub-contact elements 26 has the radius Rs directly connected to a circumferentially outermost extremity of the sub-contact element 26 in both ends, and another one of the two circumferentially outward sub-contact elements 26 has the radius Rs connected to a circumferentially outermost extremity of the sub-contact element 26 via short straight lines substantially parallel to the outline OL. Both the two circumferentially outward sub-contact elements 26, the intersection IS locates at a center region of the outermost portions 261. In this second embodiment, the radius Rs of one of the two circumferentially outward sub-contact elements 26 directly connected to a circumferentially outermost extremity of the sub-contact element 26 in both ends is 10.0 mm, and the radius Rs of another one of the two circumferentially outward sub-contact elements 26 connected to a circumferentially outermost extremity of the sub-contact element 26 via short straight lines substantially parallel to the outline OL is 6.0 mm.

Since the contact element 24 is provided with the sub-contact elements 26 with or without the radius Rs having different radius Rs, it is possible to give different functionality to each the sub-contact element 26, thus various performances can be improved simultaneously in a balanced manner.

A tread 31 according to a third embodiment of the present invention will be described referring to Fig. 4. Fig. 4 is a schematic plan view of a tread according to a third embodiment of the present invention. The construction of this third embodiment is similar to that of the first and the second embodiments other than the arrangement shown in Fig. 4, thus description will be made referring to Fig. 4.

As shown in Fig. 4, the tread 31 comprises a contact face 32 intended to come into contact with the ground during rolling, and a plurality of grooves 33 of a depth D (not shown) extending in an orientation having a non-zero angle A relative to circumferential orientation as indicated by line XX' and opening to the contact face 32. The tread 31 comprising a contact element 34 being delimited via at least two circumferentially adjacent grooves 33 of the plurality of grooves 33. In this third embodiment, the depth D is 8.0 mm, and the non-zero angle A varies between 30° to 88° as to make the contact element 34 extending obliquely against circumferential orientation.

As shown in Fig. 4, the contact element 34 having at least one incision 35 opening to the contact face 32 and extending in an orientation substantially parallel to the orientation in which the closest plurality of grooves 33 being extending and radially inward orientation, the contact element 34 being delimited into at least two sub-contact elements 36 via the plurality of grooves 33 and the at least one incision 35. An outermost portion 361 of each the sub-contact element 36 is constituting a part of the contact face 32. In this third embodiment, the contact element 34 is delimited into two sub-contact elements 36.

In case applying the present invention to the tread like this third embodiment, a portion containing a radius Rs (not shown) on the outermost portion 361 of the sub-contact element 36 may be provided on whole the sub-contact elements 36, partly in one of the sub-contact elements 36. Different radius Rs may be combined within one single sub-contact element 36, or the radius Rs varies along with the orientation in which the contact element 34, the groove 33, the incision 35 or the sub-contact element 36 is extending.

The invention is not limited to the examples described and represented and various modifications can be made within the scope of the appended claims.

### [Examples]

In order to confirm the effect of the present invention, three types of block samples of Examples to which the present invention is applied and other types of block samples of Reference and Comparative Examples were prepared.

The Examples were block samples as described in the above the first embodiment; the block sample (= the contact element) having one incision, by the incision the block sample is divided into 2 sub-contact elements, a height of the contact element (= depth D of the plurality of grooves) equals to 8.0 mm, the angle A equals to 90 degrees, the length Ls of each the sub-contact element equals to 8.5 mm, the radius Rs of the outermost portion equals to 6.0 mm, 10.0 mm and 16.0mm respectively from the Example 1 to 3. The Comparative Examples were also block samples having the same configuration as Examples except the radius Rs of the outermost portion equals to 4.0 mm and 20.0 mm respectively from the Comparative Example 1 and 2. The Reference was also a block sample having the same configuration as Examples but without the radius Rs of the outermost portion. All the Examples, Comparative Examples and Reference had the same radius Rt of 350.0 mm and were made of the same rubber material

### Snow performance tests:

The friction coefficient measurement on snow were carried out with the above Example and Reference sliding at a given condition (a displacement: 0 to 0.03 m, a speed: 0 to 0.5 m/s, and an acceleration: 5 m/s2) over a hard pack snow track, set at about -10°C with a CTI penetrometer reading of about 88 in accordance with Standard ASTM F1805, with an imposed normal stress (about 300 kPa). The forces generated in a direction of travel (Fx) of each of the Example and Reference and in another direction perpendicular to the travel (Fz) were measured. The Fx/Fz ratio determines the friction coefficient of each of the Examples, Comparative Examples and Reference on the snow. This test, the principle of which is well known to a person skilled in the art (see, for example, an article entitled "Investigation of rubber friction on snow for tires" written by Sam Ella, Pierre-Yves Formagne, Vasileios Koutsos and Jane R. Blackford (38th LEEDS-Lyons Symposium on tribology, Lyons, 6-9 Sep. 2011)) makes it possible to evaluate, under representative conditions, the grip on snow which would be obtained after a running test on a vehicle fitted with tires whose tread is composed of the same contact elements.

The results are shown in table 1. In this table 1, results are represented by an index of 100 for Reference, higher the number indicates better the performance. Within 2 points difference on this comparison could be considered as acceptable.

### Wet performance tests:

The friction coefficient measurement on wet were carried out with the above Example and Reference sliding at a given condition (a load: for example 3 kg/cm2, a speed: 0 to 5 m/s and an acceleration: 100 m/s2) over a road cores made of BBTM type asphalt concrete according to the standard NFP 98-137 covered by 1 mm deep water of 25 °C in a direction of travel of each of the Example and Reference were measured. A maximum friction coefficient detected during sliding while varying a slip ratio from 0 to 50% determines the friction coefficient of each of the Examples, Comparative Examples and Reference on the wet.

The results are also shown in table 1. In this table 1, results are represented by an index of 100 for Reference, higher the number indicates better the performance.

**[Table 1]**

| | Reference | Comparative Example 1 | Example 1 | Example 2 | Example 3 | Comparative Example 2 |
|---|---|---|---|---|---|---|
| Radius Rs (mm) | - | 4.0 | 6.0 | 10.0 | 16.0 | 20.0 |
| Snow performance (index) | 100 | 111 | 107 | 104 | 101 | 99 |
| Wet performance (index) | 100 | 92 | 104 | 104 | 107 | - |

As seen from table 1, the Examples show improvement both on snow performance and on wet performance at the same time, which cannot be achieved by treads disclosed in prior arts.

### [Reference Signs List]

- 1, 21, 31: tread
- 2, 22, 32: contact face
- 3, 23, 33: groove
- 4, 24, 34: contact element
- 5, 25, 35: incision
- 6, 26, 36: sub-contact element
- 61, 261, 361: outermost portion

## Claims

1. A tread (1) for a tire having a contact face (2) intended to come into contact with ground during rolling, the tread (1) being provided with a plurality of grooves (3) of a depth D extending in an orientation having a non-zero angle A relative to circumferential orientation and opening to the contact face (2),
at least two circumferentially adjacent grooves of the plurality of grooves (3) delimiting a contact element (4),
the contact element (4) having at least one incision (5) opening to the contact face (2) and extending in an orientation substantially parallel to the orientation in which the closest plurality of grooves (3) being extending and radially inward orientation, the contact element (4) being delimited into at least two sub-contact elements (6) via the plurality of grooves (3) and the at least one incision (5),
on a plane perpendicular to the orientation in which the plurality of grooves (3) being extending and to the contact face (2), each the at least one of the at least two sub-contact elements (6) having a length Ls, an outermost portion (61) of each the sub-contact element (6) constituting a part of the contact face (2), the outermost portion (61) of the at least one of the at least two sub-contact elements (6) having a radius Rs smaller than a radius Rt of an outline OL of the tread (1) at an intersection between the outline OL and the outermost portion (61),
the tread being **characterized in that** the radius Rs is smaller than or equal to 16.0 mm and greater than or equal to 5.0 mm.

2. The tread (1) according to Claim 1, **wherein** the intersection between the outline OL and the outermost portion (61) locates at a center region of the outermost portion (61).

3. The tread (1) according to Claim 1 or Claim 2, **wherein** the contact element (4) contains less than or equal to 5 sub-contact elements (6).

4. The tread (1) according to any one of the Claims 1 to 3, **wherein** all the sub-contact elements (6) in the same contact element (4) have the outermost portion (61) having the radius Rs.

5. The tread (1) according to Claim 4, **wherein** the radius Rs is the same at each the sub-contact element (6) in the same contact element (4).

6. The tread (1) according to any one of the Claims 1 to 5, **wherein** the non-zero angle A relative to circumferential orientation is greater than or equal to 30°.

7. A tire having a tread according to any one of the Claims 1 to 6.

## Patentansprüche

1. Lauffläche (1) für einen Reifen mit einer Kontaktfläche (2), die dazu vorgesehen ist, während des Rollens mit dem Boden in Kontakt zu kommen, wobei die Lauffläche (1) mit mehreren Rillen (3) mit einer Tiefe D versehen ist, die sich in einer Richtung mit einem ungleich null betragenden Winkel A zur Umfangsrichtung erstrecken und zur Kontaktfläche (2) hin offen sind,
wobei mindestens zwei umfangsmäßig angrenzende Rillen der mehreren Rillen (3) ein Kontaktelement (4) abgrenzen,
wobei das Kontaktelement (4) mindestens einen Einschnitt (5) aufweist, der zu der Kontaktfläche (2) hin offen ist und sich in einer Richtung, die im Wesentlichen parallel zu der Richtung ist, in der sich die nächstgelegenen mehreren Rillen (3) erstrecken, und einer radial nach innen verlaufenden Richtung erstreckt, wobei das Kontaktelement (4) durch die mehreren Rillen (3) und den mindestens einen Einschnitt (5) in mindestens zwei Kontaktunterelemente (6) abgegrenzt wird,
wobei in einer Ebene, die senkrecht zu der Richtung, in der sich die mehreren Rillen (3) erstrecken, und zu der Kontaktfläche (2) verläuft, das mindestens eine der mindestens zwei Kontaktunterelemente (6) jeweils eine Länge Ls aufweist, wobei ein am weitesten außen liegender Abschnitt (61) jedes Kontaktunterelements (6) einen Teil der Kontaktfläche (2) bildet, wobei der am weitesten außen liegende Abschnitt (61) des mindestens einen der mindestens zwei Kontaktunterelemente (6) einen Radius Rs aufweist, der kleiner als ein Radius Rt einer Kontur OL der Lauffläche (1) an einem Schnittpunkt zwischen der Kontur OL und dem am weitesten außen liegenden Abschnitt (61) ist,
wobei die Lauffläche **dadurch gekennzeichnet ist, dass** der Radius Rs kleiner gleich 16,0 mm und größer gleich 5,0 mm ist.

2. Lauffläche (1) nach Anspruch 1, wobei der Schnittpunkt zwischen der Kontur OL und dem am weitesten außen liegenden Abschnitt (61) in einem mittigen Bereich des am weitesten außen liegenden Abschnitts (61) positioniert ist.

3. Lauffläche (1) nach Anspruch 1 oder Anspruch 2, wobei das Kontaktelement (4) 5 Kontaktunterelemente (6) oder weniger enthält.

4. Lauffläche (1) nach einem der Ansprüche 1 bis 3, wobei alle Kontaktunterelemente (6) in demselben Kontaktelement (4) den am weitesten außen liegenden Abschnitt (61) mit dem Radius Rs aufweisen.

5. Lauffläche (1) nach Anspruch 4, wobei der Radius Rs bei jedem der Kontaktunterelemente (6) in demselben Kontaktelement (4) gleich ist.

6. Lauffläche (1) nach einem der Ansprüche 1 bis 5, wobei der ungleich null betragende Winkel A zur Umfangsrichtung größer gleich 30° ist.

7. Reifen mit einer Lauffläche nach einem der Ansprüche 1 bis 6.

## Revendications

1. Bande de roulement (1) pour un pneumatique comportant une face de contact (2) destinée à entrer en contact avec le sol lors du roulement, la bande de roulement (1) étant pourvue d'une pluralité de rainures (3) d'une profondeur D s'étendant dans une orientation présentant un angle A non nul relativement à une orientation circonférentielle et débouchant sur la face de contact (2),
au moins deux rainures circonférentiellement adjacentes parmi la pluralité de rainures (3) délimitant un élément de contact (4),
l'élément de contact (4) comportant au moins une incision (5) débouchant sur la face de contact (2) et s'étendant dans une orientation sensiblement parallèle à l'orientation dans laquelle s'étend la pluralité de rainures (3) la plus proche et une orientation radialement vers l'intérieur, l'élément de contact (4) étant délimité en au moins deux sous-éléments de contact (6) par la pluralité de rainures (3) et l'au moins une incision (5),
sur un plan perpendiculaire à l'orientation dans laquelle s'étend la pluralité de rainures (3) et à la face de contact (2), chacun l'au moins un des au moins deux sous-éléments de contact (6) présentant une longueur Ls, une partie extérieure extrême (61) de chaque sous-élément de contact (6) constituant une partie de la face de contact (2), la partie extérieure extrême (61) de l'au moins un des au moins deux sous-éléments de contact (6) présentant un rayon Rs inférieur à un rayon Rt d'un contour OL de la bande de roulement (1) à une intersection entre le contour OL et la partie extérieure extrême (61),
la bande de roulement étant **caractérisée en ce que** le rayon Rs est inférieur ou égal à 16,0 mm et supérieur ou égal à 5,0 mm.

2. Bande de roulement (1) selon la revendication 1, dans laquelle l'intersection entre le contour OL et la partie extérieure extrême (61) est située au niveau d'une région centrale de la partie extérieure extrême (61).

3. Bande de roulement (1) selon la revendication 1 ou la revendication 2, dans laquelle l'élément de contact (4) contient un nombre inférieur ou égal à 5 de sous-éléments de contact (6).

4. Bande de roulement (1) selon l'une quelconque des revendications 1 à 3, dans laquelle la partie extérieure extrême (61) de tous les sous-éléments de contact (6) dans le même élément de contact (4) présente le rayon Rs.

5. Bande de roulement (1) selon la revendication 4, dans laquelle le rayon Rs est le même au niveau de chaque sous-élément de contact (6) dans le même élément de contact (4).

6. Bande de roulement (1) selon l'une quelconque des revendications 1 à 5, dans laquelle l'angle A non nul relativement à l'orientation circonférentielle est supérieur ou égal à 30°.

7. Pneumatique comportant une bande de roulement selon l'une quelconque des revendications 1 à 6.
